# EUROPEAN PATENT APPLICATION

(11) **EP 4 772 766 A1**
(43) Date of publication of application: **08.07.2026**
(21) Application number: 25226291.0
(22) Date of filing: 22.12.2025
(51) Int. Cl.: F16H 25/22, F16H 25/24, B66B 9/02, F16H 25/20

(54) **MOVING SYSTEM COMPRISING A THREADED BAR AND A NUT**

(30) Priority: 07.01.2025 IT 202500000084
(71) Applicant: Euroup S.r.l., 50131 Firenze (IT)
(72) Inventor: BARBAGALLO, Paolo, 59100 Prato (IT)
(74) Representative: Firmati, Leonardo

(57) **Abstract**

Moving system (1), comprising a polygonal threaded bar (2) having a main axis of development (A); a nut (3) configured to engage in screwing with said polygonal threaded bar (2) and move relative to said bar (2) along said axis (A); a platform (6) disposed resting on an upper portion of said nut (3) and moved along said axis (A) by said nut (3) itself, said platform (6) having a gap (61) through which said polygonal bar (2) passes, said gap (61) having a polygonal shape substantially counter-shaped to a polygonal ridge (21) of said threaded polygonal bar (2).

## Description

The present invention relates to a movement system.

More specifically, the present invention concerns a moving system of the type comprising a threaded bar and a nut engaged with and movable along it.

Such moving systems are typically used to move a load from one level to a higher one, and vice versa.

Moving systems are used both in industrial and other contexts, such as residential settings, as in the case of elevators or lifts.

The moving system object of the present invention is also particularly useful in domestic settings.

With particular reference to domestic use, but not limited to it, elevators or lifts must be able to operate safely and efficiently while ensuring optimal space utilization.

In addition, these elevators or lifts must be able to guarantee the above conditions while also offering optimal quietness and low energy consumption.

Among the solutions known to date, there are some that involve the use of a mechanism comprising a threaded bar onto which a nut is fitted.

From the operating mechanism of such known systems, for example applied to lifts/elevators, it inevitably follows that the rotation of the nut along the threaded bar causes a binding reaction with a vertical component (useful for the required movement) and a horizontal component (not useful).

This horizontal component, if not counterbalanced, would cause the elevator cabin, anchored to the nut itself, to rotate.

To overcome this problem, known systems involve the installation of reaction guides arranged parallel to the threaded bar and designed to balance the horizontal component generated by the rotary-translational motion of the screw, preventing unacceptable rotation of the elevator cabin.

The systems known to date provide a solution that is certainly valid in terms of effectiveness but is not without its drawbacks.

Firstly, the installation of such reaction guides compromises safety in some cases, such as when the elevator is not segregated.

A further drawback is that these reaction guides, installed to prevent the elevator cabin from rotating, are visually unappealing for purely aesthetic reasons.

Another drawback of known systems is that they require a structure that is not always simple and inexpensive to build.

Furthermore, the necessary presence of these reaction guides significantly limits the freedom to position these moving systems (elevators) within a room, making it difficult, for example, to install them in the center of the room itself.

In addition, a further problem associated with reaction guides is that, due to their length, they are generally very flexible, meaning that they need to be oversized or braced.

The object of this invention is therefore to provide a moving system capable of resolving the drawbacks of the state of the art highlighted above.

A further object of the present invention is to provide a moving system capable of preventing the rotation of the elevator cabin without the need for installations that negatively affect the safety and aesthetic impact of the system.

Another object of the present invention is to provide a moving system capable of ensuring an excellent degree of safety for the system as a whole.

A further object of the present invention is to provide a moving system that allows an elevator to be installed freely in any position within a room, without the need for lateral supports.

Another object of the present invention is to provide a moving system that is simple and inexpensive to manufacture.

According to the invention, these and other objects are achieved by a moving system having the technical characteristics described in the attached claims.

The technical characteristics of the invention, according to the above objects, are clearly described in the attached claims, and its advantages are evident from the detailed description that follows, with reference to the attached drawings that illustrate a purely exemplary and non-limiting embodiment, wherein:
- Figure 1 illustrates a schematic cross-sectional view of a moving system according to the present invention, and
- Figure 2 illustrates a schematic perspective view of a polygonal bar of the moving system shown in Figure 1. With reference to Figure 1 attached, reference number 1 indicates a moving system that is the object of the present invention, hereinafter also referred to simply as system 1.

As explained in the introduction, a moving system refers, for example, to an elevator or a lift. Advantageously, the direction of movement is defined as vertical with respect to a horizontal plane or the ground, but there is nothing to prevent the use of the moving system 1 according to the present invention to move loads in directions that are inclined or parallel to a horizontal plane or the ground.

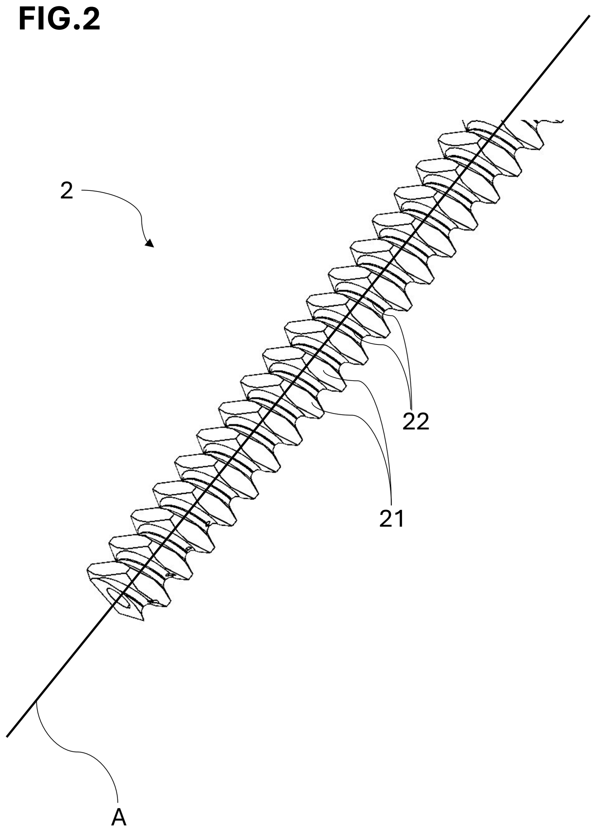

With particular reference to Figure 2 attached, the system 1 of the present invention comprises a threaded polygonal bar 2.

This threaded polygonal bar 2 has a main axis of development A.

According to the embodiment illustrated in the attached figures, axis A is essentially straight.

According to a further embodiment not illustrated, the main axis A of development has a curvature.

This embodiment is particularly useful, for example, when there is no vertical correspondence between the arrival point and the starting point due to the different positioning of the walls in the rooms located on upper and lower floors, respectively.

In other words, the main axis A of development is not necessarily straight.

Essentially, the direction of movement (for example, of the platform introduced below) is parallel or coincident with this main axis A of development of the polygonal bar 2.

The threaded polygonal bar 2 comprises a polygonal ridge 21 and a helical groove 22.

The ridge 21 and the groove 22 define a thread of the threaded polygonal bar 2.

The ridge 21 refers to the prominent part of the thread profile, while the groove 22 (also known as the bottom) refers to the "valley" between two consecutive ridges 21.

Essentially, the ridge 21, viewed from above, defines the perimeter of polygonal bar 2.

Advantageously, the polygonal ridge 21 has a four-sided configuration.

In other words, according to this advantageous design, the perimeter of the polygonal ridge 21 is square, and thus the shape of the polygonal bar 2 seen from above is also square.

The system 1 comprises a nut 3 configured to engage in screwing with the groove 22 of the threaded polygonal bar 2.

The nut 3 moves relative to the polygonal bar 2 along axis A, essentially in rototranslation on it.

In particular, the polygonal bar 2 is fixed with respect to the ground, while the nut 3 is mobile in rototranslation on it.

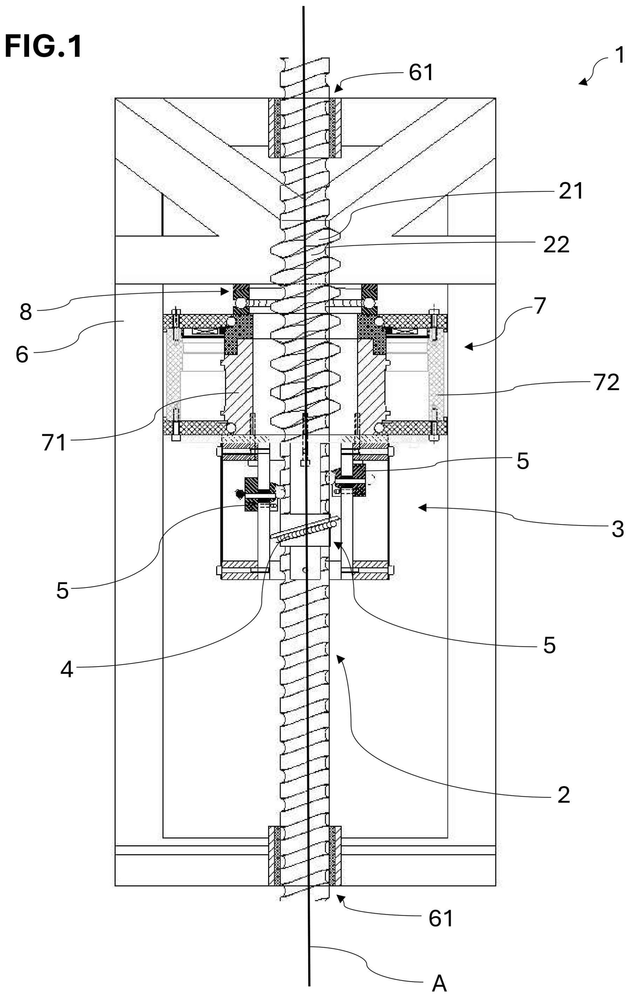

According to the embodiment illustrated in Figure 1, the nut 3 advantageously comprises a plurality of sliders 5 with recirculating balls 4 configured to engage with the aforementioned groove 22.

Advantageously, the sliders 5 are arranged at an angle on the nut 3.

Advantageously, the nut 3 also comprises a plurality of angularly distributed seats configured to house the sliders 5.

According to another possible embodiment not illustrated, the nut 3 is of the standard type.

A standard nut is one without ball recirculation sliders, for example.

The system 1 object of the present invention comprises a platform 6 resting on the upper portion of the nut 3 and moved along the aforementioned axis A by means of the nut 3 itself.

The platform 6 refers, for example, to a structure that may include, for example, an elevator cabin, or any structure suitable for the linear transport of objects or people.

The platform 6 has a gap 61 configured to be crossed by the polygonal bar 2.

The gap 61 has a polygonal shape that is substantially counter-shaped to the polygonal ridge 21.

Therefore, the structure of the polygonal bar 2 and the gap 61, within which the bar 2 itself is arranged, allows the platform 6 itself to be moved along a direction parallel or coincident with axis A (in both directions), but at the same time prevents unwanted rotation of the platform 6 itself since the polygonal (advantageously quadrangular) shape of the polygonal bar 2 and the gap 61 makes it impossible for the platform itself to rotate with respect to the polygonal bar 2.

This is guaranteed by the fact that the inner walls of the gap 61 of the platform 6 are constantly opposed by the sides of the ridge 21 of the polygonal bar 2.

This structure eliminates the horizontal component of the rototranslation of the nut 3 on the groove 22 of the polygonal bar 2, allowing only vertical movement to be transferred to platform 6.

In fact, the structure described allows the horizontal component of the rototranslation of the nut 3 to be closed in on itself and limits the torsional stress of the polygonal bar 2 itself to the length of the bar 2, between the gaps 61.

With reference to the attached figure 1, the system 1 comprises a motor 7 for moving the nut 3 in rototranslation around the threaded polygonal bar 2.

The motor 7 advantageously comprises a rotor 71 and a stator 72.

The stator 72 is fixed to the platform 6 by means of appropriate fixing means.

Fixing means include, for example, screws and bolts, or pairs of reaction arms, so as to completely cancel out the radial components acting on the stator 72.

Advantageously, the system 1 also includes an anti-friction bearing 8.

This anti-friction bearing 8 is interposed between the nut 3 and the platform 6.

The anti-friction bearing 8 minimizes friction between the contact surfaces of the nut 3 and the platform 6.

Advantageously, the system 1 includes safety and locking means for the nut 3.

Advantageously, in the case of reversible threading, these safety and locking means also comprise a unidirectional rack.

Advantageously, the system 1 of the present invention also comprises anti-friction means.

These anti-friction means are interposed between an internal wall of the gap 61 and the polygonal bar 2.

In particular, the anti-friction means are interposed between an internal wall of the gap 61 and an external surface of the polygonal ridge 21.

Advantageously, the anti-friction means comprise a bushing or a ball support.

The moving system of the present invention makes it possible to overcome the drawbacks of the prior art and to achieve significant advantages.

A first advantage of the moving system 1 according to the invention is that it provides a solution capable of ensuring an excellent degree of safety for the system as a whole.

A further advantage of the invention's moving system 1 is that it provides a solution capable of canceling out the horizontal component of the reaction generated by the rototranslation of the nut on the threaded bar, without the need for installations that negatively alter the aesthetic impact of the system.

The above advantages are also obtained without stressing the polygonal threaded bar outside the area between the gaps 61 and the anti-friction means arranged in the vicinity thereof.

Another advantage of the present invention is that it provides a moving system that allows a lift/elevator to be installed freely in any position within a room, without the need for lateral supports.

Another advantage of the present invention is that it provides a moving system that is simple and inexpensive to manufacture.

Another advantage of the present invention is that it provides a moving system offering optimal flexibility of use.

In particular, the present moving system can also be used for applications that are not necessarily rectilinear.

## Claims

1. Moving system (1), comprising:
- a threaded polygonal bar (2) having a main development axis (A), said threaded polygonal bar (2) comprising a polygonal ridge (21), and a groove (22) with a helical pattern, said polygonal ridge (21) and said groove (22) defining a thread of said threaded polygonal bar (2);
- a nut (3) configured to engage in screwing with said groove (22) of said threaded polygonal bar (2) and move relative to said bar (2) along said axis (A);
- a platform (6) placed to rest on an upper portion of said nut (3) and moved along said axis (A) by means of said nut (3) itself, said platform (6) having a gap (61) crossed by said polygonal bar (2), said gap (61) having a polygonal shape substantially counter-shaped to said polygonal ridge (21).

2. System (1) according to claim 1, **characterized in that** it comprises a motor (7) for moving said nut (3) in rototranslation around said polygonal bar (2), said movement motor (7) comprising a rotor (71) and a stator (72).

3. System (1) according to the preceding claim, **characterized in that** it comprises means for fixing said stator (72) to said platform (6).

4. System (1) according to claim 2, **characterized in that** it comprises an anti-friction bearing (8) interposed between said nut (3) and said platform (6).

5. System (1) according to any of the preceding claims, **characterized in that** it comprises safety and locking means for said nut (3).

6. System (1) according to any of the preceding claims, **characterized in that** it comprises anti-friction means interposed between an internal surface of said gap (61) and said polygonal bar (2).

7. System (1) according to any of the preceding claims, **characterized in that** said ridge (21) of said polygonal bar (2) has a four-sided shape.

8. System (1) according to any of the preceding claims, **characterized in that** said nut (3) comprises a plurality of recirculating ball (4) sliders (5) configured to engage with said groove (22).

9. System (1) according to the preceding claim, **characterized in that** said sliders (5) are arranged angularly on said nut (3), and that said nut (3) comprises a plurality of seats angularly distributed and configured to house said sliders (5).

10. System (1) according to any of the preceding claims, **characterized in that** said axis (A) has a curvature.
